# EUROPEAN PATENT APPLICATION

(11) **EP 1 538 764 A1**
(43) Date of publication of application: **08.06.2005**
(21) Application number: 03293043.0
(22) Date of filing: 04.12.2003
(51) Int. Cl.: H04J 3/14, H04J 3/16, H04J 3/08

(54) **Frame for signalling of span and ring events in a four-fibre synchronous telecommunications ring network**

(71) Applicant: ALCATEL, 75008 Paris (FR)
(72) Inventor: Manganini, Andrea Filippo, 20058 Villasanta (Milano) (IT)
(74) Representative: Menzietti, Domenico

(57) **Abstract**

A frame is described for optimized signalling of Span and Ring events at the same time in a four-fibre terrestrial or transoceanic synchronous telecommunications network (SDH or SONET) with ring topology, by using in MSOH the K bytes and an additional byte K0. The frame is characterized by K0 byte having a first bit (NRFI/RFI) to indicate if a ring event is present in the ring and a second bit (NSFI/SFI) to indicate if a span event is present in the ring and by K1 byte having Bridge Request field for indication of the type of event and K0 byte having a third bit (Span/Ring) to indicate if it is a span or ring event.

## Description

The present invention relates to telecommunications networks and in particular concerns networks with a four-fibre ring topology whose traffic is protected by a Multiplex Section Shared Protection Ring (MS-SPRING) mechanism. Still more in particular it concerns a frame for an optimized signalling of simultaneous Span and Ring events by using the K bytes.

In the field of telecommunications, fibre-optic networks with ring topology are known, the networks comprising a number of nodes or Network Elements (NE) connected to each other by fibre spans so as to form a ring. The traffic in such networks is carried over so-called paths, i.e. circuits connecting two or more network elements of the ring.

Mechanisms for traffic protection in such networks are also known. Among these, one kind of distributed mechanism called MS-SPRING (Multiplex Section Shared Protection Ring) is well known.

In a Synchronous Optical Network (SONET) or Synchronous Digital Hierarchy (SDH) telecommunications network with a four-fibre ring topology with an MS-SPRING protection, the available band is subdivided into two parts: the High-Priority channels denoted by HP (to be protected in the event of failure in the ring) and the Low-Priority channels denoted by LP (which are unprotected and, in the event of a failure, are dropped). Low-priority channels are also referred sometimes as Extra Traffic (ET). Along the direction of transmission, two adjacent nodes are interconnected by four fibres (two in one direction and two in the opposite direction); the high-priority channels occupy, in the absence of failures, the working fibre, while the low-priority channels (LP) occupy the protection fibre, until the latter is required to perform protection in the ring.

In such networks, a span failure is referred to as the break or the degrade of one or both working fibres connecting two nodes (respectively SF_S = signal fail span and SD_S = signal degrade span); in this case the span protection (span switch) contemplates that all the HP traffic be restored by re-routing it over the protection fibre of the same span. Instead, a ring failure is referred to as the break or the degrade of both working and protection fibres between two adjacent nodes, in one or both directions (respectively SF_R = signal fail ring and SD_R = signal degrade ring). In this case a ring protection (ring switch) is contemplated which provides for re-routing the HP traffic, that would be lost because of the break, in terrestrial application by nodes adjacent to the failure, while in transoceanic application re-routing is performed by nodes that insert and drop the HP traffic, in both cases in the direction opposite to the failure by using the LP channels. External commands with different priority are also possible: span commands are Force Switch Span (FS_S), Manual Switch Span (MS_S) and Exercise Span (EXER_S), while ring commands are Force Switch Ring (FS_R), Manual Switch Ring (MS_R) and Exercise Ring (EXER_R). Other type of external commands are Lockout of working channels - ring, Lockout of working channels - span, Lockout of protection - all span.

Span "events" includes span failures and span commands, while ring events includes ring failures and ring commands. The difference among all these codes is in the priority: for example a SF has a priority higher than a SD, because in the first case data is completely lost, while in the second data is still received but with bit errors. The term "type of events" refers to all possible failures and commands (either span or ring): possible types of events are LP-S, FS, SF, SD, MS, EXER. Two additional events are Wait to Restore (WTR) and Reverse Request Span or Ring (RR_S or RR_R). The first is used after the clearing of a failure (either span or ring); the second is an answer sent by a node to a span or ring request of another node.

The problem common to all the protection mechanisms consists in protecting and saving the largest possible amount of HP traffic and to guarantee the lowest loss of LP channels.

The ring topology provides that, in the event of a single failure, all the high-priority traffic is restored. However, the situation becomes critical when a plurality of failures are present in the ring: in order to maximize the protected traffic, every node should be able to signal all the local failures and commands so as to notify its requests to the entire ring.

The ring network protection management is standardized by Recommendation G. 841 of International Telecommunication Union (ITU-T G.841 10/98, including Annex A ) and European Telecommunications Standards Institute (ETSI). In both recommendations, the protection protocol is based on bytes K1, K2 (called K bytes) of the SDH (or SONET) frame, which are part of Multiplex Section Overhead (MSOH). In four-fibre ring topology, K bytes are carried on the protection channels. Byte K1 is coded in the following manner: the first four bits carry bridge request codes while the next four bits carry the destination node identifications (ID) for the bridge request code indicated in the first four bits. The bridge request code carries the information of the type of span or ring event, that is the failure or command for which a coordinated action of the ring nodes is required. Bridge means that traffic is transmitted over both working and protection fibre, switch means that traffic is received from the working or from the protection channel. The functions of the byte K2 are as follows: the first four bits carry source node identifications, the last three bits define the state while the fifth bit represents a path length code (0 = short path, 1 = long path).

In the case of ring protection, all nodes take part directly, thus allowing the signalling to pass through the entire ring and possibly performing some actions on the traffic. A necessary condition for the ring protection to be managed is that the signalling reaches all the nodes (signalling on the long path) that will all get into a pass-through state, except nodes adjacent to the fail in terrestrial and drop/insert nodes in transoceanic application that will be in the Bridge & Switch state (traffic is transmitted over both working and protection channel and is received from the protection channel) .

In the case of span protections it is not required that K bytes reach all nodes: the only ones involved in the protection are those adjacent to the span affected by the span failure. In this instance it is said that the span protection is managed through signalling over the short path. The status code synchronizes the actions to be taken so as to avoid misconnections on the paths.

The ITU-T Recommendation G. 841 allows that several span requests or several ring requests, but not both ring and span requests together, be served at the same time on the ring; in such a circumstance the traffic passing through the span affected by a span failure is protected but not the one passing through the span affected by the ring failure.

The idea of managing at the same time multiple span and ring events is already known from EP 1235373, where the method consists of 2 pairs of bytes, (K1,K2) and (K1',K2'), the first pair for signalling events of one type and the second for signalling events of other type (span and ring or viceversa), so that 4 bytes (32 bits) are required.

In addition the problem of increasing the number of nodes manageable by the protection arises. Since from standard ITU -T G.841 the available bits for IDentification (ID) of the source or destination nodes are only four, the existing telecommunication rings cannot have more than sixteen nodes. This obviously represents a high limitation in the development of communications networks.

Another problem related to the K1 and K2 bytes is that, when they change, there is a request from one component to another (usually an interrupt from an integrated circuit to the microprocessor) for each changed byte (hence one or, at the most, two). In any case it is necessary to manage the time sequence of the events to fully manage the information contained in the K1 and K2 bytes.

Finally, some commands exist which are not signalled through the K bytes to the other nodes, but they remain local (lockout of working span/ring). Other commands (lockout of protection all span), even if not signalled, are requested to have global effect: they are not carried over K bytes and therefore they have to be individually given to each node through management center.

In summary, by implementing the known protection procedures, the following problems arise:
- it is not possible to handle in an optimized way events of different type (Ring and Span);
- it is not possible to handle more than 16 nodes in a ring;
- the reaction mechanism to the simultaneous change of value of bytes K1 and K2 is not optimized;
- it is not possible to report some particular commands present in a node to the other nodes.

In view of the drawbacks and deficiencies of the known and standardized solutions, as described above, the main object of the present invention is to provide a frame for signalling Span and Ring events at the same time on a four-fibre terrestrial or transoceanic telecommunications synchronous ring network, by using the K bytes in an optimized way. This object is achieved by a frame according to claim 1. Only 19 bits are required, with a redesign of Bridge Request codes of K1 and 3 additional bits from a further byte in MSOH. Moreover in a preferred embodiment, according to claim 3, the optimized frame can recover LP paths not required for protection and avoid paths misconnections when a span event is rising in the ring and at least one ring event is already present in the ring. In a further preferred embodiment, according to claim 5, the optimized frame can discriminate between a Wait to Restore (WTR) code after clearing of a span failure or after a clearing of a ring failure, which can manage better some events, like a rising of a SF ring when a WTR after clearing of a span failure is already present in the ring. A correlated object of the present invention is also to provide a solution for increasing the maximum number of nodes that can be present and managed by the protocol, according to claim 4. This is achieved by 4 additional bits in the third byte.

The present invention makes advantageously use of the existing signalling bytes K1 and K2 and a new byte called K0 as shown in the following, so as to allow the simultaneous handling of more Span requests also of different priorities, and Ring requests at the same priority as that of the Span (which should have higher priority). In this way it is possible:
- to recover as many HP channels as possible and to guarantee the lowest loss of LP channels
- to handle till 64 nodes per ring;
- to introduce synchronization to analyse the variations of the K bytes in an atomic way;
- to report to all nodes in the ring the presence of local commands.

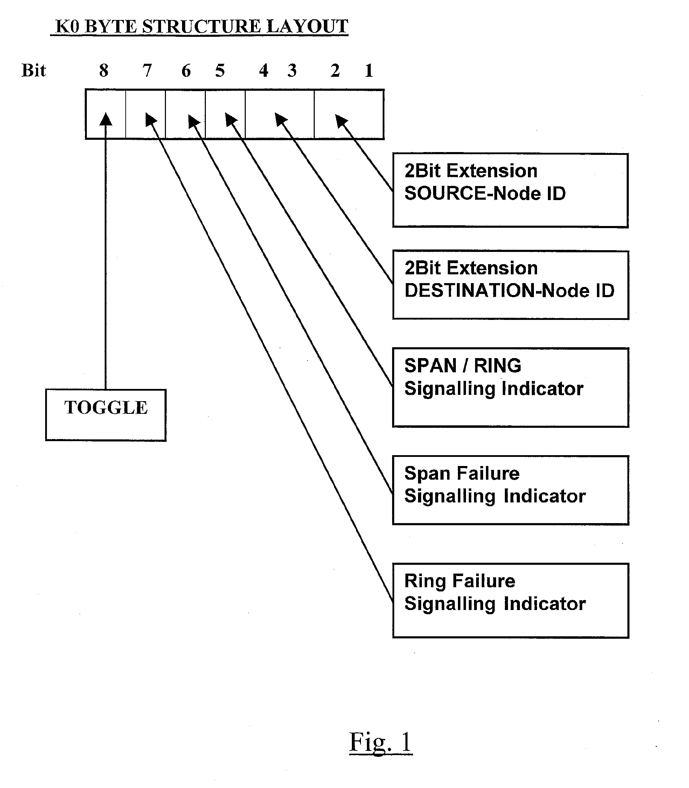

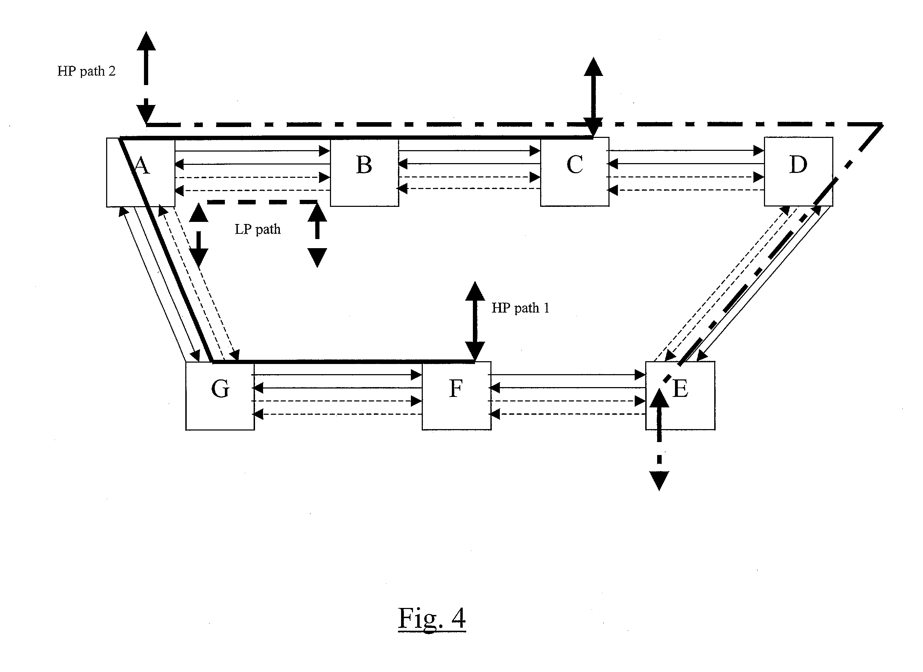

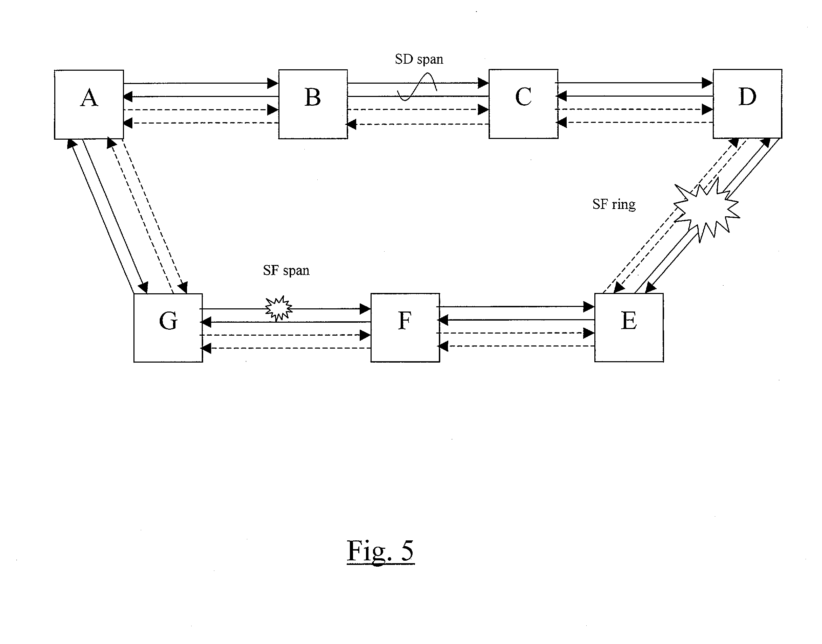

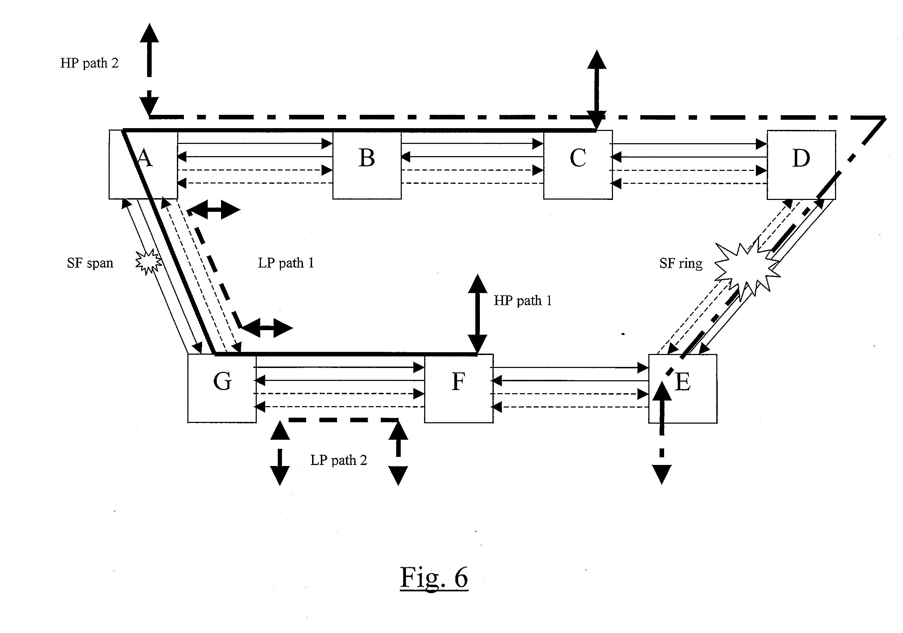

The invention will become fully clear from the following detailed description, given by way of a mere exemplifying and non limiting example, to be read with reference to the attached drawing figures. Figures 1, 2 and 3 show the byte structures of K0, K1 and K2 respectively. Fig.4 shows a schematic diagram of a telecommunication network with a four-fibre ring topology composed of seven Network Elements identified by A, B, C, D, E, F and G, with two HP paths and a LP path: all paths are bidirectional. Fig.5 shows the same network of fig.4 without paths and affected by a span failure, a span degrade and a ring failure at the same time. Fig.6 shows the same network of fig.4, with the same HP paths but two different LP paths and affected by a ring failure and a span failure at the same time.

With reference to Fig. 1, for the K0 byte the following values are provided for the various bits:
- bits 1, 2: 2-bit extension for identifying the Source Node;
- bits 3, 4: 2-bit extension for identifying the Destination Node;
- bit 5: Span/Ring Indicator, for example 0=Span, 1=Ring;
- bit 6: Span Failure Signalling Indicator, for example:
   0 = No Span Failure Is present on the Ring (NSFI),
   1 = Span Failure Is present on the Ring (SFI);
- bit 7: Ring Failure Signalling Indicator, for example:
   0 = No Ring Failure Is present on the Ring (NRFI),
   1 = Ring Failure Is present on the Ring (RFI);
- bit 8: Toggle condition.

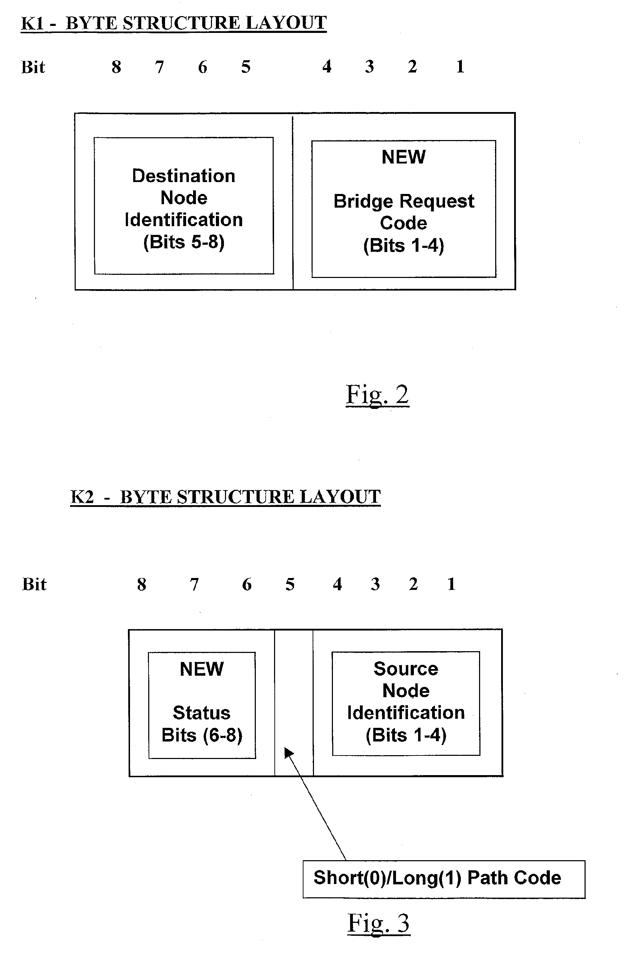

With reference to fig. 2, for the K1 byte the field "Destination Node Identification" (bits 5-8) is as known: with 4 bits a maximum number of 16 nodes can be assigned. Referring to the "NEW Bridge Request Code" field of K1, it is possible to provide two different variations of the formats as shown in the following.

The first Format of the "NEW Bridge Request Code" field is a completely new one. In this case it is not required to mark a "K0 Extra byte is used" into the field "NEW status Bits" of K2 byte, as shown below.

### First Format of "NEW Bridge Request Code" Values (example of increasing order of priority):

- 00: No Request (NR)
- 01: Reverse Request (RR)
- 02: Exercise (EXER)
- 03: Wait to Restore (WTR)
- 04: Manual Switch (MS)
- 05: Signal Degrade (SD)
- 06: Signal Degrade Protection (SD-P)
- 07: Signal Failure (SF)
- 08: Force Switch (FS)
- 09: Lockout of Protection (LP-S) only for SPAN or Signal Fail Protection (SF-P)
- 10: Reserved For Future Use
- 11: Reserved For Future Use
- 12: Reserved For Future Use
- 13: Lockout of Working command is present at node (LW)
- 14: Action Request Signalling (ARS)
- 15: Request Status Signalling (RSS)

The most important types of events are indicated by 6 codes RR, EXER, MS, SD, SF and FS. SF is used for signalling the fail (break) of a fibre, while SD for signalling the degrade of a fibre. FS and MS are external commands for performing bridge and switch of HP traffic from working to protection channels, having FS a priority higher than MS. EXER is used for exercising protection switching using K bytes, but without completing the bridge and switch action. RR is an acknowledgement for receiving of FS or SF or SD or MS or EXER. NR is transmitted when there is no need to use the protection channels. SF-P is used for signalling a failure of the protection channel, LP-S for preventing the usage of the addressed span for a span switch over the same span or for preventing the usage of the addressed span for a ring switch of other spans, SD-P for signalling a degrade of the protection channel, LWC for preventing the high priority traffic from working channels over the addressed span from accessing the protection channels for the type of protection indicated by Span/Ring bit of K0.

The second Format of the "NEW Bridge Request Code" field maintains consistency with the known protocol version usually used to realize the MS-SPRING protection. The advantage is that a node with a MS-SPRING protocol compliant to ITU-T G.841 is able to interwork with a node where exists a protocol version also able to manage and use K0 byte. In the second format it is useful to provide the information to mark that a "K0 Extra byte" is used or not into the field "NEW Status bits" of K2 byte, as shown below, or to provide it as a provisioning information of the equipment.

### Second Format of "NEW Bridge Request Code" Values (example of increasing order of priority):

00 No Request (NR) in any case
01 Reverse Request Ring (RR-R) when no K0 byte is used or when in K0 byte "Ring Signalling" is set

Lockout of Working Span (LW-S) when in K0 byte "Span Signalling" is set
02 Reverse Request Span (RR-S) when no K0 byte is used or when in K0 byte "Span Signalling" is set

Lockout of Working Ring (LW-R) when in K0 byte "Ring Signalling" is set
03 Exercise Ring (EXER-R) ) when no K0 byte is used or when in K0 byte "Ring Signalling" is set

Action Request Signalling (ARS) when in K0 byte "Span Signalling" is set
04 Exercise Span (EXER-S) when no K0 byte is used or when in K0 byte "Span Signalling" is set

Action Request Signalling (ARS) when in K0 byte "Ring Signalling" is set
05 Wait Time to Restore in any case
06 Manual Switch Ring (MS-R) ) when no K0 byte is used or when in K0 byte "Ring Signalling" is set

Request Status Signalling (RSS) when in K0 byte "Span Signalling" is set
07 Manual Switch Span (MS-S) when no K0 byte is used or when in
K0 byte "Span Signalling" is set

Request Status Signalling (RSS) when in K0 byte "Ring Signalling" is set
08 Signal Degrade Ring (SD-R) in any case
09 Signal Degrade Span (SD-S) in any case
10 Signal Degrade Protection (SD-P) in any case
11 Signal Failure Ring (SF-R) in any case
12 Signal Failure Span (SF-S) in any case
13 Force Switch Ring (FS-R) in any case
14 Force Switch Span (FS-S) in any case
15 Lockout of Protection (LP-S) or Signal Fail of Protection (SF-P) in any case

If K0 byte is not used, the second format is the same as shown in Table 7-7 of ITU-T G.841. If K0 byte is used, 6 codes (01, 02, 03, 04, 06, 07) have two possible meanings, depending on the value of Span/Ring bit of K0, for indication of the type of event and if it is a span or ring event; 8 further codes (08, 09, 10, 11, 12, 13, 14, 15) have only one meaning and each code already indicates the type of event and if it is a span or ring event and so Span/Ring bit of K0 is not required.

With reference to fig. 3, for the K2 Byte the field "Source Node Identification" (bits 1-4) is as known: with 4 bits a maximum number of 16 nodes can be assigned. Referring to the "NEW Status" value (bits 6-8) field of K2, a format is provided as in the following.

### NEW Status Values:

- 00: Idle (Id)
- 01: Bridged (Br)
- 02: Bridged and Switched (BrSw)
- 03: Extra Traffic On Protection Channels (ET)
- 04: Answer Status Signalling (Asw)
- 05: Extra K0 byte is used or not
- 06: MS-RDI
- 07: MS-AIS

Idle is used when there is no need to use the protection channels, Bridged when traffic is transmitted over both working and protection channel, Bridged and Switched when traffic is received from the protection channel, ET when protection channels carries low priority traffic. MS-RDI (Multiplex Section Remote Defect Indication ) and MS-AIS (Multiplex Section Alarm Indication Signal ) are used for alarms signalling at section level (refers to recommendation ITU-T G.707 and G.783).

Extension bits source / destination node identifier of K0 are used in combinaton with source / destination node identifier of K1 and K2 to manage until 64 nodes in a ring.
Toggle bit of K0 is used to trigger, if changed from the previous value, reading of K bytes (for example with an interrrupt by an ASIC or FPGA to a microprocessor) because if changed an action is required for reconfiguration of HP/LP paths. The transmitter advantageously takes care of sending first the bytes K1 and K2 and only finally K0 byte: only if the latter contains in the "Toggle" field a code which is different from the previous one, it will trigger the interrupt. Only at this point the entire information contained in the three bytes will be read. Alternatevely without toggle bit it is necessary to manage the time sequence of events when K bytes change.

Concerning Bridge Request codes of K1, the new code ARS is used for example for signalling on the long path that a span event is rising in the ring when at least a previous ring event is already present in the ring: this is useful to avoid paths misconnections. The new code RSS is used, together with code Asw in Status field of K2, for example for detecting the location and type of a ring event when at least one span event is present in the ring.
Concerning Status codes of K2, two are completely new (Asw and "Extra K0 byte is used or not"), while others codes are already known in the art. "Extra K0 byte is used or not" is valid only when the second format is used. This code is not permanent, but it is required only at startup during the building of the ring, when all nodes need to know if working with a protocol compliant to ITU-T G.841 or working with the improved protocol using K0 byte. It is not required with the second format if a node already knows this information from provisioning level.

The following example explains better the preferred embodiment of the invention.

### Example 1

The first example shows in the first part how to manage at the same time two span events of different priority (fail and degrade) and a ring event of the same type (fail) as the highest span event (fail), using the first format of bytes K1 and K2 and 3 bits of K0 ( NRFI/RFI, NSFI/SFI, Span/Ring). The second part shows how to manage Bridge Request code RSS of K1 and Status code Asw of K2 for detecting the location and the type of the ring event when two span events of different priority (fail and degrade) are already present in the ring.
The following notation of K bytes will be used:
[BridgeRequest]_[DestinationNodeId]_[SourceNodeId]_[S/ L]_[Status]_[RF I/NRFIU]_SFI /NSFI]_[Span/Ring]

Others fields of K0 (toggle and Extension Node Identifier) are not indicated.
Referring to fig.4, a first HP path is present between node C and F, crossing nodes B, A and G, and a second HP path between node A and E, crossing B, C and D. A LP path between node A and B is on same time slot as HP path 2, while HP path 1 and 2 are on different time slots.

Referring to fig.5, suppose at time t = t0 node G detects a break (SF=signal fail) on working fibre from node F (SF span): HP path 1 on this span is recovered by a span switch from working to protection channel between node F and G. Node G sends the following K bytes:
to node F: SF_F_G_S_Id_NRFI_SFI_Span
to node A: SF_F_G_L_Id NRFI_SFI_Span
When node F receives indication of changed K bytes from node G (short path), it sends the following K bytes:
to node G: RR_G_F_S_Br_NRFI_SFI_Span
to node E: SF_G_F_L_Br_NRFI_SFI_Span

When node G receives indication of changed K bytes from node F, it sends the following K bytes:
to node F: SF_F_G_S_BrSw_NRFI_SFI_Span
to node A: SF_F_G_L_BrSw_NRFI_SFI_Span

Finally when node F receives indication of changed K bytes from node G, it sends the following K bytes:
to node G: RR_G_F_S_BrSw_NRFI_SFI_Span
to node E: SF_G_F_L_BrSw_NRFI_SFI_Span

At time t = t1 node B detects a signal degrade (SD) on working fibre from node C (SD span): HP paths 1 and 2 are recovered by a span switch from working to protection channel between node B and C. Evolution of the protocol is the same as the previous case, with SD code instead of SF. At the end node B sends the following K bytes
to node C: SD_C_B_S_BrSw_NRFI_SFI_Span
to node A: SD_C_B_L_BrSw_NRFI_SFI_Span
and node C sends the following K bytes
to node B: SD_B_C_S_BrSw_NRFI_SFI_Span
to node D: SD_B_C_L_BrSw_NRFI_SFI_Span

At time t= t2 node D detects a break on both working and protection channels between node D and E (SF ring): according to ITU-T G.841 a SF ring has a priority higher than a SD span (and so span switch between node B and C must be dropped), but lower than a SF span (and so span switch between node F and G is still present). Ring switch is not completed but is signalled on K bytes and information of the degrade between node B and C is lost. In this way the HP path1 from node C to F would be degraded (while HP path 2 is lost because crossing the ring fail). It is better to continue to have the span switch between node B and C to protect HP path 1 from the degrade. So at t=t2 node D sets RFI bit and sends the following K bytes:
to node C: SF_E_D_L_Id_RFI_SFI_Ring
to node E: SF_E_D_S_Id_RFI_SFI_Ring

Node C is advised that a SF Ring is present in the ring, it still knows that a SF Span is present in the ring (because before time t2 it was receiving from node D SF_G_F_L_BrSw_NRFI_SFI_Span) and so it keeps span switch between node B and C. The same behaviour has node F for span switch between node F and G. Information that a ring fail is present in the ring (bit RFI) reaches node A. Node A receives
from node B: SD_C_B_L_BrSw_RFI_SFI_Span
from node G: SF_F_G_L_BrSw_RFI_SFI_Span
and so it knows that a ring fail is present in the ring, but it doesn't know the type and the location. Node A needs to know the type and location of the ring failure, for example because HP path 2 is lost (it crosses the ring fail) and must be squelched to avoid misconnections with insertion of AU-AIS (Administrative Unit - Alarm Indication Signal) or for restoring LP path not required for protection of the ring failure (LP path between node A and B on same time slot as HP path 2 is not required to be dropped). This is achieved using Bridge Request code RSS of K1 and Status code Asw of K2.
Node A sends the following K-Byte stream to obtain all the information it needs:
to node G: RSS_G_A_S_Id_RFI_SFI_Ring
to node B: RSS_ B_A_S_Id_RFI_SFI_Ring

The Ring Fail is between node D and E, so nodes adjacent to A are not the addressees of K-byte request RSS from A. They change the Destination Node (node G with F, node B with C) and Path Length Code (S with L) fields and continue the K-Byte stream to the opposite way the side where the message from node A is received. When this K-byte stream reaches the node is managing the Ring Failure, an Asw code for node A will be prepared and will be sent back. At the end of inquiring procedure node A will receive the following K-byte stream:
from node G: SF_D_E_L_Asw_RFI_SFI_Ring
from node B: SF_E_D_L_Asw_RFI_SFI_Ring
Now node A knows where is the Ring Failure and the consequent actions can be activated (squelching HP path 2 and restoring of LP path).

The same procedure is required at startup of a node, for example when a new node is inserted in a ring, to find the correct type and location of all failures in the ring.
In the following are listed some possible combinations of failures and commands for the explained procedure, where are present at least two span requests of different priority, and a ring request of the same type as the highest span request:
- FS Ring, FS Span, SF Span, SD Span, MS Span, EXER Span
- FS Ring, FS Span, SF Span, SD Span, MS Span
- FS Ring, FS Span, SF Span
- SF Ring, SF Span, SD Span, MS Span, EXER Span
- SF Ring, SF Span, SD Span, MS Span
- SF Ring, SF Span, SD Span (Example 1)
- SD Ring, SD Span, MS Span, EXER Span
- SD Ring, SD Span, MS Span
- MS Ring, MS Span, EXER Span

### Example 2

The second example shows how to manage Bridge Request code ARS of K1 for signalling on the long path that a span event is rising in the ring when one ring event is already present in the ring (see fig. 6): this is used in transoceanic applications to recover LP paths not required for protection and to avoid path misconnections during transient condition of protocol.

Referring to fig.6, suppose to have the same HP path 1 and 2 of the first example and two LP paths, between node A and G (LP path 1) and between node F and G (LP path 2). HP path 1 is on same time slot as LP path 1 and HP path 2 is on same time slot as LP path 2, while HP path 1 and 2 are always on different time slots.
At time t = t0 a SF Ring occurs between node D and E: HP path 2 is recovered with a ring switch and LP path 2 is dropped because required for protection of HP path 2.
At time t = t1 a SF Span occurs between node A and G which has priority higher than SF Ring between node D and E: HP path 2 is lost because crosses SF Ring and so must be squelched and Bridge and Switch at nodes A and E must be dropped, LP path 1 must be dropped because is required for protection of HP path 1, HP path 1 must be protected with a span switch between node A and G, while LP path 2 can be recovered because is not required for any protection. All these actions must be performed in the correct order to avoid path misconnectons: this is possible with new code ARS, while in the standard there is always the same code SF during transient condition of protocol and after having completed the protection. Before detecting SF Span, node A is receiving the following K bytes:
from node G: SF_D_E_L_BrSw_RFI_NSFI_Ring
from node B: SF_E_D_L_BrSw_RFI_NSFI_Ring

At time t = t1 node A detects a break on working fibre (unidirectional span SF) and sends the following K bytes:
to node G (short path): SF_G_A_S_Id_RFI_SFI_Span
to node B (long path): ARS_G_A_L_Id_RFI_SFI_Span

Signalling on long path carries information that a previous Ring failure is always present in the ring (RFI) and that now also a Span failure is present (SFI) and that management of this last failure is not ended (Id_Span). Evolution of protocol on short and long path follows the standard rules, except for Bridge Request code of K1 that is set to ARS on long path, both from node A and from node G. So when node G receives SF_G_A_S_Id_RFI_SFI_Span from node A on short path, it sends the following K bytes:
to node A (short path): RR_A_G_S_Br_RFI_SFI_Span
to node F(long path): ARS_A_G_L_Br_RFI_SFI_Span

When node A receives RR_A_G_S_Br_RFI_SFI_Span from node G on short path, it sends the following K bytes:
to node G (short path): SF_G_A_S_BrSw_RFI_SFI_Span
to node B (long path): SF_G_A_L_BrSw_RFI_SFI_Span

Finally when node G receives SF_G_A_S_BrSw_RFI_SFI_Span from node A on short path, it sends the following K bytes:
to node A (short path): RR_A_G_S_BrSw_RFI_SFI_Span
to node F (long path): SF_A_G_L_BrSw_RFI_SFI_Span
So nodes A and G send Bridge Request = SF on long path (like the standard) only after having completed the span switch (BrSw code in Status field of K2).

If another span events occurs, for example a span degrade between nodes B and C (that can be completed like explained in the first example), receiving code ARS is the only way a node (which is not on the span where the span event occurs) can know which HP paths must be squelched, which LP paths must be dropped because required for protection, which HP paths can be protected and which LP paths can be recovered because not required for protection.

Naturally, the inventive concepts of the present invention are however valid also in the case where the order of the bits is different from that indicated in Fig. 1, 2 and 3. As far as the position of the K0 byte is concerned, there are no special constraints. Conventionally, for reasons of possible future use of the other bytes, it is preferred that the K0 byte is in the 9^{th} row and 9^{th} column of the first STM-1, in practice the one in the lower right-hand corner of MSOH.

An inventive method is described for indicating span and ring events at the same time. In case a ring event occurs, bit NRFI/RFI of K0 is set to RFI to indicate that a ring event is present, Bridge Request field of K1 byte is set to indicate the type of the event and bit Span/Ring of K0 is set to Ring to indicate that the type of event is a ring event. In case a span event occurs, bit NSFI/SFI of K0 is set to SFI to indicate that a span event is present, Bridge Request field of K1 byte is set to indicate the type of the event and bit Span/Ring of K0 is set to Span to indicate that the type of event is a span event.

This method can be advantageously implemented on a Network Element, for example an Add-Drop Multiplexer (ADM), including means for receiving and elaboration of K bytes and for perform actions resulting from elaboration of K bytes, like an Application Specific Integrated Circuit (ASIC), a Field Programmable Gate Array (FPGA) or a microprocessor, and in a preferred embodiment through or together with a software program like Very high speed integrated circuit Hardware Description Language (VHDL) or C language. Therefore, it is understood that the scope of the protection is extended to such a program and in addition to a computer readable means having a recorded message therein, said computer readable means comprising program coding means for the implementation of one or more steps of the method, when this program is run on a computer, an ASIC, an FPGA or a microprocessor.

## Claims

1. Frame for a Synchronous Optical Network (SONET) or Synchronous Digital Hierarchy (SDH) telecommunications network with ring topology protected by a four-fibre terrestrial or transoceanic Multiplex Section Shared Protection Ring (MS-SPRING) mechanism in which digital signals are transmitted in frames, each frame comprising in the Multiplex Section Overhead (MSOH) a first byte K1 and a second byte K2 ,
K1 byte having 4 bits assigned to Destination Node Identifier and 4 bits to Bridge Request Codes,
K2 byte having 4 bits assigned to Source Node Identifier, 3 bits assigned to Status and one bit to Short/ Long path Code,
the frame being **characterized by**
a third byte (K0) in the Multiplex Section Overhead (MSOH) having a first bit (NRFI/RFI) to indicate if a ring event is present in the ring and a second bit (NSFI/SFI) to indicate if a span event is present in the ring,
K1 byte having Bridge Request field with at least 6 codes (RR, EXER, MS, SD, SF, FS) for indication of the type of event and third byte (K0) having a third bit (Span/Ring) to indicate if the type of event is a span or ring event.

2. Frame according to claim 1, **characterized by** K2 byte having Status field with one code (Asw) and K1 byte having Bridge Request field with a further code (RSS) for detecting the location and the type of a ring event when at least one span event is present in the ring or for detecting the location and the type of a span event when at least one ring event is present in the ring.

3. Frame according to claim 1, **characterized by** K1 byte having Bridge Request field with a further code (ARS) for signalling that a span event is present in the ring when at least one previous ring event is already present in the ring or for signalling on the long path that a ring event is present in the ring when at least one previous span event is already present in the ring.

4. Frame according to claim 1, **characterized by** third byte (K0) having at least another bit for the extension of the Destination Node Identifier and at least another bit for the extension of the Source Node Identifier.

5. Frame according to claim 1, **characterized by** K1 byte having Bridge Request field with a further code (WTR) for indication of the clearing of a defect condition on working channels.

6. Frame according to claim 1, **characterized by** third byte (K0) having at least a further bit (Toggle) which indicates, if different from the previous one, that K1 byte and/or K2 byte and/or the first bit of the third byte (K0) and/or the second bit of the third byte (K0) and/or the third bit of the third byte (K0) have changed.

7. Frame according to claim 1, **characterized by** K2 byte having Status field with a further code (Extra K0) to activate the first, second and third bit of the third byte (KO).

8. Method for indicating span and ring events in a Synchronous Optical Network (SONET) or Synchronous Digital Hierarchy (SDH) telecommunications network with ring topology protected by a four-fibre terrestrial or transoceanic Multiplex Section Shared Protection Ring (MS-SPRING) mechanism in which digital signals are transmitted in frames, each frame including in the Multiplex Section Overhead (MSOH) a first byte K1, a second byte K2 and a third byte (K0), K1 byte having 4 bits assigned to Bridge Request codes, the method comprising the following steps:
- in case a ring event occurs, a first bit (NRFI/RFI) in the third byte (K0) is set to indicate that a ring event is present, one code in Bridge Request field of K1 byte is set to indicate the type of the event and a third bit (Span/Ring) in the third byte (K0) is set to indicate that the type of event is a ring event,
- in case a span event occurs, a second bit (NSFI/SFI) in the third byte (K0) is set to indicate that a span event is present, one code in Bridge Request field of K1 byte is set to indicate the type of the event and a third bit (Span/Ring) in the third byte (K0) is set to indicate that the type of event is a span event.

9. Network element for a Synchronous Optical Network (SONET) or Synchronous Digital Hierarchy (SDH) telecommunications network with ring topology protected by a four-fibre terrestrial or transoceanic Multiplex Section Shared Protection Ring (MS-SPRING) mechanism in which digital signals are transmitted in frames, each frame including in the Multiplex Section Overhead (MSOH) a first byte K1, a second byte K2 and a third byte (K0), K1 byte having 4 bits assigned to Bridge Request codes, the network element comprising
means for receiving and elaboration of third byte (K0) having a first bit (NRFI/RFI) to indicate if a ring event is present in the ring and a second bit (NSFI/SFI) to indicate if a span event is present in the ring,
and means for receiving and elaboration of K1 byte having Bridge Request field for indication of the type of event and third byte (K0) having a third bit (Span/Ring) to indicate if the type of event is a span or ring event.

10. Computer program comprising computer program code means adapted to perform all steps of the method according to claim 8 when said program is run on a computer.

11. Computer readable medium having a program recorded thereon, said computer readable medium comprising computer program code means adapted to perform all steps of the method according to claim 8 when said program is run on a computer.
